**Europäisches Patentamt**

**European Patent Office**

**Office européen des brevets**

(11) Veröffentlichungsnummer: **0 393 322**

**A2**

# EUROPÄISCHE PATENTANMELDUNG

(21) Anmeldenummer: **90103077.5**

(22) Anmeldetag: **17.02.90**

(51) Int. Cl.⁵: **G02B 6/22**

(30) Priorität: **15.04.89 DE 3912400**

(43) Veröffentlichungstag der Anmeldung:
**24.10.90 Patentblatt 90/43**

(84) Benannte Vertragsstaaten:
**CH DE FR GB IT LI**

(71) Anmelder: **Schott Glaswerke**
**Hattenbergstrasse 10**
**D-6500 Mainz(DE)**

(84) **CH DE FR IT LI**

Anmelder: **Carl-Zeiss-Stiftung trading as**
**SCHOTT GLASWERKE**
**Hattenbergstrasse 10**
**D-6500 Mainz 1(DE)**

(84) **GB**

(72) Erfinder: **Nattermann, Kurt, Dr.**
**Im Brühl 7**
**D-6507 Ingelheim(DE)**
Erfinder: **Bader, Hubert, Dr.**
**Gürtlerstrasse 44**
**D-6500 Mainz(DE)**

(54) **Optische Stufenindexfaser zur Übertragung von Laserstrahlung mit hoher Leistung.**

(57) Es wird eine optische Stufenindexfaser zur Übertragung von Strahlung mit hoher Leistung, insbesondere Laserstrahlung, beschrieben, die Strahlung ohne wesentliche Verschlechterung der Strahlqualität (des Strahlproduktes) übertragen kann, die sich mit einem bestimmten Radius biegen läßt und bei der die Querschnittsfläche des Strahls auf der Einkoppelfläche der Faser sehr groß sein kann. Es werden Formeln zur Berechnung der Abmessungen der Faser gegeben.

**EP 0 393 322 A2**

Eine Kenngröße von Lasern ist die Strahlungsleistung. Die Strahlungsleistung von Dauerstrich-Lasern mit hoher Leistung kann im kW-Bereich und darüber liegen, bei gepulsten Lasern liegt die Spitzenleistung häufig sogar im Bereich weit oberhalb von 1 MW. Einerseits eröffnen sich mit diesen hohen Strahlungsleistungen viele technische Anwendungen von Lasern, andererseits besteht wegen dieser hohen Leistungen die Gefahr der Zerstörung von optischen Komponenten. Bei der Auswahl von optischen Komponenten für Laser mit hoher Strahlungsleistung ist deshalb große Sorgfalt notwendig.

Das Strahlprodukt ($\theta \cdot D$) ist eine weitere Kenngröße. Für einen zur Achse rotationssymmetrisches Strahl ist es das Produkt aus dem Durchmesser D in m mit dem vollen Divergenzwinkel $\theta$ in rad des Strahls am Laserausgang. Im allgemeineren Fall nichtrotationssymmetrischer Strahlen, wenn die Sehne des Strahls und/oder der Divergenzwinkel der Strahlung vom Winkel $\phi$ senkrecht zur Strahlachse abhängt, bezeichnet $\theta \cdot D$ das Maximum von $\theta(\phi) \cdot D(\phi)$ in Abhängigkeit von $\phi$, wobei $\theta(\phi)$ den vollen Divergenzwinkel in rad der Strahlung in Abhängigkeit von $\phi$ und $D(\phi)$ die durch den Scheitelpunkt des Winkels $\phi$ gehende Sehne in m in Abhängigkeit von $\phi$ bezeichnet und $\theta(\phi)$ und $D(\phi)$ auf den Ausgang des Lasers bezogen sind. In dieser Definition ist das Strahlprodukt zwar auf den Laserausgang bezogen, zu seiner Bestimmung ist es jedoch nur selten notwendig, es auch direkt am Laserausgang zu messen. Das Strahlprodukt bleibt nämlich erhalten, wenn man bei der Strahlführung sorgfältig vorgeht. Das heißt, das Strahlprodukt ist bei Beachtung bekannter Regeln eine die Strahlung charakterisierende Erhaltungsgröße und kann auch in großer Entfernung vom Laser gemessen werden. Insbesondere bei Leistungslasern läßt sich das Strahlprodukt gut bestimmen, weil die Strahlungsintensität dieser Laser meistens abrupt sinkt, sobald ein kritischer Wert für den Abstand von der Strahlachse überschritten wird, d.h. die Kontur des Laser strahls in der Ebene senkrecht zur Strahlachse ist scharf definiert. Aber auch wenn die Intensität mit zunehmendem Abstand von der Strahlachse nicht abrupt absinken sollte, läßt sich das Strahlprodukt ausreichend genau bestimmen messen - etwa dadurch, daß die Kontur des Laserstrahls durch den $1/e^2$-Wert der Strahlungsintensität, bezogen auf das Intensitätsmaximum, definiert wird.

Für die Strahlung am Ausgang eines Lasers mit hoher Leistung sind für den Strahldurchmesser Werte von $1 \cdot 10^{-3}$ m bis $5 \cdot 10^{-2}$ m und für den vollen Divergenzwinkel Werte von $1 \cdot 10^{-3}$ rad bis $5 \cdot 10^{-2}$ rad üblich, in Sonderfällen können die Werte auch weit darüber liegen. Typisch für das Strahlprodukt von Lasern mit hoher Leistung sind Werte von $2 \cdot 10^{-5}$ rad$\cdot$m bis $3 \cdot 10^{-4}$ rad$\cdot$m, beispielsweise sind für Nd-Laser im Dauerstrichbetrieb mit Leistungen von 100 W bis zu 1 kW Werte von $5 \cdot 10^{-5}$ rad$\cdot$m bis $2 \cdot 10^{-4}$ rad$\cdot$m und für Nd-Laser im Dauerstrichbetrieb oberhalb von 1 kW Werte von bis zu $3 \cdot 10^{-4}$ rad$\cdot$m üblich.

Ein niedriges Strahlprodukt ist gleichbedeutend mit einer guten Qualität der Laserstrahlung. Für die Anwendungen ist eine gute Strahlqualität bzw. ein niedriges Strahlprodukt von wesentlicher Bedeutung - viele Anwendungen erschließen sich nämlich nur dann, wenn das Strahlprodukt ausreichend niedrig ist (z.B.: H. Weber, "High Power Nd-Lasers for Industrial Applications", Proc. SPIE 650, S. 92, 1986). Deshalb wird bei der Entwicklung von Lasern für medizinische und technische Anwendungen ein erheblicher Aufwand getrieben, um das Strahlprodukt der Laserstrahlung zu reduzieren.

Bei genügender Sorgfalt kann man Strahlung mit optischen Komponenten (Linsen, Spiegeln usw.) führen, ohne ihr Strahlprodukt wesentlich zu verändern. Wenn diese Sorgfalt fehlt, wird das Strahlprodukt vergrößert. Eine Verkleinerung des Strahlproduktes ist hingegen prinzipiell nur unter Inkaufnahme von meist erheblichen Strahlungsverlusten möglich. Die Hersteller und Anwender von Lasern akzeptieren deshalb keine Strahlführungssysteme, die die Qualität der Laserstrahlung verschlechtern. Wenn für die Übertragung von Strahlung eine flexible Faser verwendet werden soll, ist es also ein entscheidender Vorteil, wenn die Faser die Strahlung so überträgt, daß das Strahlprodukt am Austrittsende der Faser im Vergleich zum Wert am Eintrittsende nur wenig vergrößert wird.

Bei optischen Fasern ist der minimale Biegeradius $R_{min}$ eine weitere entscheidende Kenngröße. Das ist der kleinste Radius, auf den sich eine Faser biegen läßt, ohne daß sie durch biegungsinduzierte mechanische Spannungen zerstört wird und ohne daß die biegungsinduzierten Strahlungsverluste die Faser oder ihre Umgebung zerstören oder gefährden oder ihre Übertragungseffizienz zu stark herabsetzen.

Die zur Zeit für die Leistungsübertragung verwendeten optischen Fasern verhalten sich bei Biegungen elastisch. Durch Biegung auf kleine Radien treten insbesondere an der Faseroberfläche (Manteloberfläche) hohe mechanische Spannungen auf, wodurch die Faser brechen kann. Mit den heutigen Herstellungsverfahren für optische Fasern, insbesondere für Glasfasern, werden jedoch sehr hohe Materialfestigkeiten erreicht. Wenn nicht etwa durch Alterung die Festigkeit der Faser wieder nachläßt, hat die Bruchgefahr letztlich, im Vergleich mit biegungsinduzierten Strahlungsverlusten, eine nur untergeordnete Bedeutung. Auf jeden Fall muß das Fasersystem aber Sicherheitskomponenten enthalten, die bei einem Faserbruch die Strahlungszufuhr unterbrechen. Geeignete Leckstrahlungs- und Faserbruchdetektoren sind bekannt.

Biegungsinduzierte Strahlungsverluste können "eigentliche Biegungsverluste" und sog. Übergangsverluste sein. Die Verluststrahlung wird im allgemeinen noch in der Faser oder in ihrer unmittelbaren Umgebung in Wärme umgesetzt, es sind also die Aspekte der verminderten Übertragungseffizienz der Faser (das ist das Verhältnis der von der Faser übertragenen Strahlungsleistung zur eingekoppelten Leistung) und der thermischen Belastbarkeit der Faser zu berücksichtigen.

Eigentliche Biegungsverluste entstehen, weil die Strahlung im Kern gebogener Fasern an sog. Leckwellen ankoppelt. Diese Verluste treten aber nicht auf einem kurzen Faserabschnitt auf - charakteristisch ist vielmehr, daß sie sich im wesentlichen auf den gesamten gebogenen Faserabschnittes verteilen. Deshalb kann durch eine geeignete Kühlung der Faser ihre durch Biegungsverluste entstehende thermische Belastung im allgemeinen soweit reduziert werden, daß sie ungefährdet ist. Die Grenzen der technischen Verwendbarkeit der Faser entstehen hier durch die verminderte Übertragungseffizienz der Faser oder dadurch, daß die Kühlung der Faser für die Praxis zu aufwendig wird.

Übergangsverluste entstehen, wenn sich die Biegung der Faser ändert (Änderung des Biegeradius usw.). Charakteristisch für diese Verluste ist, daß sie auf kurzen Faserabschnitten unmittelbar an oder hinter der Übergangsstelle auftreten. Deshalb kann bei hohen Strahlungsleistungen die lokale thermische Belastung einer Faser so hoch sein, daß sie nicht mit einem für die Praxis vertretbarem Aufwand gekühlt werden kann. Das kann auch dann gelten, wenn die Verminderung der Übertragungseffizienz durch Übergangsverluste für die Anwendungen vernachlässigbar ist. Im allgemeinen sind bei hohen Strahlungsleistungen die Einschränkungen durch die Übergangsverluste wirksamer als die durch die Biegungsverluste.

Es ist experimentell und theoretisch bekannt, daß die Biegungs- und Übergangsverluste stark vom Fasertyp und vom Biegeradius abhängen. Für eine Faser kann meistens ein zulässiger minimale Biegeradius angegeben werden, so daß sichergestellt ist, daß diese Verluste ausreichend klein sind, wenn ihr Biegeradius stets größer ist als dieser minimale Wert (nachfolgend: minimaler Biegeradius der Faser). Es sind auch Vorrichtungen bekannt, mit denen sich erreichen läßt, daß eine Faser nur auf Radien gebogen werden kann, die größer als ein vorbestimmter Minimalwert sind.

Die erforderlichen minimalen Biegeradien der Fasern werden durch die Anwendungssituationen bestimmt. Für Fasern zur Übertragung von hohen Strahlungsleistungen zeichnet sich ab, daß zur Verbindung stationärer Geräte minimale Biegeradien von ≈ 0,3 m ausreichen, zur Verbindung beweglicher Geräte ≈ 0,15 m bis 0,3 m, für Beschriftungszwecke und für Industrieroboter 0,1 m bis 0,15 m und daß für extrakorporale medizinische Anwendungen von Leistungslasern minimale Biegeradien von ≈ 0,05m ausreichen werden. Für invasive medizinische Anwendungen werden zwar Biegeradien von weniger als 0,05m gefordert, es ist aber zur Zeit unklar, ob dafür überhaupt Leistungslaser eingesetzt werden.

Könnte man den für die Anwendung erforderlichen Biegeradius mit einer Faser unterschreiten, hätte man keinen Vorteil. Stattdessen müßte man für die Gestaltung der Faser und bezüglich der Strahlungsverteilung in der Faser meistens sogar empfindliche Nachteile in Kauf nehmen. Es ist daher von Vorteil, solche Fasern herzustellen, die sich möglichst genau - natürlich unter Berücksichtigung einer ausreichenden Sicherheit - mit dem durch die Anwendungen erforderlichen Radius biegen lassen, und gegebenenfalls durch mechanische Vorrichtungen sicherzustellen, daß dieser Biegeradius beim Einsatz der Fasern nicht unterschritten wird. Eine technisch brauchbare Faser sollte also folgende Eigenschaften aufweisen:

- eine hohe optische Zerstörschwelle bzw. eine hohe maximal übertragbare Strahlungsleistung,
- keine Verschlechterung der Strahlqualität durch die Übertragung,
- eine hohe Übertragungseffizienz und
- daß der für die Anwendungen geforderte minimale Biegeradius der Fasern möglichst genau erreicht bzw. eingehalten wird.

Fasern bzw. Fasersysteme zur Übertragung von Laserstrahlung mit hoher Strahlungsleistung sind in der Literatur und Patentliteratur bekannt.

Die US-Patentschrift US 47 07 073 beschreibt ein faseroptisches Strahlführungssystem zur Übertragung hoher Strahlungsleistungen, bei dem die Faser gekühlt wird, um ihre Überhitzung infolge radialer Auskoppelverluste zu verhindern. Die optische Faser hat einen sehr großen Kerndurchmesser von $1 \cdot 10^{-3}$ m und eine Manteldicke von $1 \cdot 10^{-4}$ m (Faser SM 1000 von Dainichi-Nippon Cables, Tokyo, Japan). Dadurch wird die Faseroberfläche groß und der Wärmeübergang zwischen Faser und Kühlmedium gut - der große Durchmesser dieser Faser verhindert jedoch, daß sie mit dem für viele Anwendungen erforderlichen Radius gebogen werden kann. Wegen des großen Kerndurchmessers und der großen Numerischen Apertur hat die Faser weiter den Nachteil, daß sie Laserstrahlung nicht mit der für die Anwendungen erforderlichen Strahlqualität übertragen kann.

Bei einer intensiven Kühlung der Faser kann auch das Problem auftreten, daß das meist flüssige Kühlmittel (z.B. Wasser) durch das Fasercoating dringt, die Faseroberfläche beschädigt (z.B. durch Eindiffusion von OH-Ionen oder durch Auswaschungen) und die mechanische Festigkeit der Faser herabsetzt. Dem versucht man durch die Verwendung dichterer Coatingmaterialien wie z.B. Metalle zu begegnen. Die europäische Patentanmeldung EP 00 63 581 beschreibt z.B. eine optische Faser mit sogar zwei metallischen Beschichtungen, um die Dichtigkeit der Faserabschirmung weiter zu verbessern. Bei Verwendung derartiger Fasern zur Leistungsübertragung könnte u.U. der Durchmesser der Fasern deutlich reduziert werden. Die realisierbaren Metallcoatings haben jedoch nicht die gewünschten Eigenschaften. Außerdem entstehen durch die Metallcoatings andere Probleme: Um nennenswerte Schichtdicken (etwa $50 \cdot 10^{-6}$ m) zu erreichen, müssen die Metalle flüssig aufgebracht werden - durch dabei auftretende thermische und mechanische Belastungen werden die Fasereigenschaften aber ungünstig beeinflußt. Die Eigenschaften (z.B. Wärmeausdehnungskoeffizient und Elastizitätsmodul) der in Frage kommenden Metalle und Fasermaterialien (meistens Gläser) sind stark verschieden. Dadurch kommt es in der Faser zu mechanischen Spannungen, die u.a. starke Mikrokrummungsverluste hervorrufen (z.B.: T. Shiota, H. Hidaka, O. Fukuda und K. Inada, "High temperature effects of aluminium coated fibers", IEEE J. Lightwave Techn. 4, S. 1151, 1986). Nicht zuletzt wird die Strahlung, die den Kern verläßt und das Fasercoating erreicht, vom Metallcoating auf einer sehr kurzen Länge absorbiert - die Verwendung eines Metallcoatings führt in der Regel dazu, daß die Strahlungsverluste stärker lokalisiert in Wärme umgewandelt wer den, die thermische Belastung der Faser nimmt sogar zu.

Unter der Bezeichnung "double-clad Fasern" und "multiple-clad-Fasern" sind in der Literatur Fasern mit zusätzlichen Schichten zwischen Kern und Mantel bekannt. Jedoch handelt es sich dabei überwiegend um Monomode-Fasern, die wegen des kleinen Kerndurchmessers nicht zur Übertragung von hohen Strahlungsleistungen geeignet sind. Der Zweck der zusätzlichen Schichten ist die Verbesserung der Dispersion oder die Beeinflussung der cut-off-Bedingung von Fasern für die Nachrichtentechnik, die nur kleine Strahlungsleistungen (einige mW) übertragen.

Meistens handelt es sich dabei um "depressed-cladding-Fasern" (z.B: H.R.D. Sunak und S.P. Bastien, "Universal single-mode dispersion-flattened fluoride fibre designed for optimum performance from 1.5 to 2.9 $\mu$m", Electron. Lett. 24, S. 879, 1988). Bei diesen Fasern ist die Brechzahl der zusätzlichen Zwischenschicht niedriger als die Brechzahl der innersten Mantelschicht. Ähnliches gilt auch für bestimmte Ausführungen von Multimodefasern: Die US-Patentschrift US 46 91 990 beschreibt beispielsweise eine Faser, bei der zur Erzeugung einer hohen Numerische Apertur auf den Kern eine zusätzliche Schicht aus einem Glas mit besonders niedriger Brechzahl aufgebracht wird, welche aber, z.B. weil die mechanischen Eigenschaften des Materials dieser Schicht ungünstig sind, dünn und von einem weiteren stabilen Glasmantel mit höherer Brechzahl umgeben ist. Fasern, bei denen die Brechzahl der Zwischenschicht kleiner als die Brechzahl des umgebenden Mantels ist, haben jedoch den Nachteil, daß die Zwischenschicht keine Strahlung führen kann. Abgesehen davon können Fasern, bei denen wie in der Technik üblich nach einer möglichst hohen Numerischen Apertur gestrebt wird, eben wegen der hohen Numerischen Apertur die Strahlung nicht mit der für die Anwendungen geforderten Strahlqualität übertragen.

Es sind auch double- und multiple-clad-Fasern bekannt, bei denen die Brechzahlen von Schichten radial von innen nach außen abnehmen. Bei diesen Fasern ist aber die Brechzahldifferenz zwischen dem Material des Kerns und dem der ersten den Kern umgebenden Schicht größer als die Brechzahldifferenzen zwischen den Materialien der nachfolgenden Schichten (z.B.: L. Cohen, D. Marcuse und W.L: Mammel, "Radiating leaky-mode losses in single-mode lightguides with depressed-index claddings", IEEE Journal of Quantum Electronics QE-18, S. 1467, 1982). Charakteristisch ist ferner, daß die Brechzahl der Schichten, nachdem sie ein Minimum erreicht hat, wieder radial zunimmt, wie es in der US-Patentschrift US 46 91 991 für eine Monomodefaser beschrieben ist (derartige Fasern werden wegen der typischen Form des radialen Brechzahlprofils auch als "W-Fasern" bezeichnet).

Die bekannten double- und multiple-clad-Fasern haben einige günstige Eigenschaften, für die Übertragung von Monomode-Strahlung, für die Übertragung von Multimodestrahlung sind sie aber unbrauchbar, beispielsweise weil die Biegeverluste der höheren Moden groß sind (z.B.: H. Schwierz und E.-G. Neumann, "Bend losses of higher-order modes in dispersion flattened multiple clad optical fibres", Electron. Lett. 24, S. 1296, 1987). Außerdem würde in Multimodefasern mit den Brechzahlverhältnissen der double- und multiple-clad-Fasern die Strahlung, die in die Schichten zwischen dem Kern und dem Mantel gerät, sehr schnell die Faser verlassen. In Fasern zur Übertragung von hohen Strahlungsleistungen könnten diese Schichten deshalb nicht ausgenutzt werden.

Die europäische Patentanmeldung EP 02 34 233 beschreibt eine Faser zur Übertragung hoher Strahlungsleistungen, bei der, um radiale Abstrahlungsverluste zu reduzieren, der Mantel aus einem radialen Schichtsystem besteht, das ähnlich wie das Schichtensystem eines dielektrischen Spiegels wirkt. Dazu ist es notwendig, daß die Dicke der Schichten von der Größe der Strahlungswellenlänge (also weniger als $10^{-5}$ m) ist und daß die Brechzahlunterschiede zwischen benachbarten Schichten groß sind. Der wesentliche Nachteil dieser Faser ist, daß die erforderlichen Toleranzen fertigungstechnisch schwer einzuhalten sind und daß sie sich nicht auf das Strahlprodukt der Strahlung abstimmen läßt und deshalb nicht Strahlung mit der für die Anwendungen erforderlichen Strahlqualität übertragen kann.

Die Aufgabe der Erfindung besteht darin, eine zur Übertragung hoher Strahlungsleistungen geeignete Multimodefaser zu finden, die sich mit einem vorgegebenen Radius biegen läßt, deren Kern Strahlung ohne wesentliche Vergrößerung des Strahlproduktes der ausgestrahlten Strahlung im Vergleich zur eingestrahlten Strahlung übertragen kann, bei der die Querschnittsfläche des Kerns ausreichend groß ist und deren biegungsinduzierte Strahlungsverluste ausreichend niedrig sind, um Beschädigungen der Faser bei der Ein- und Auskopplung und Übertragung der Strahlung zu vermeiden, und deren Verluststrahlung auf ausreichend lange Faserabschnitte verteilt wird, so daß die Erwärmung der Faser oder ihrer Umgebung niedrig ist.

Diese Aufgabe löst die in Patentanspruch 1 beschriebene Faser.

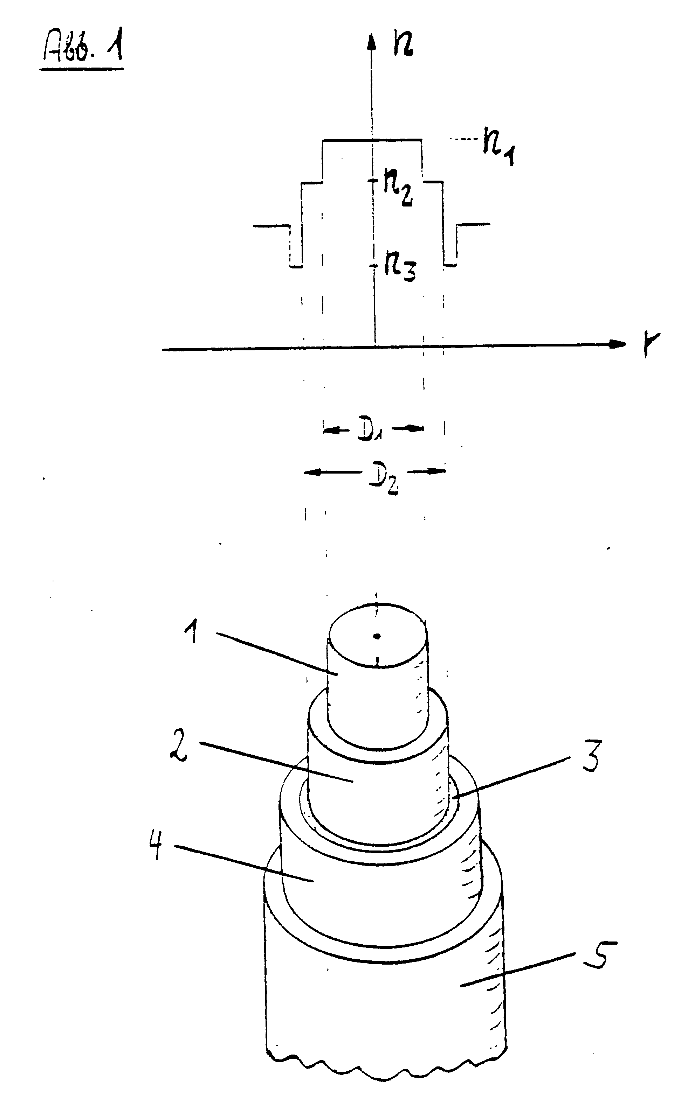

Anhand der Abbildung wird die Erfindung weiter erläutert. Sie zeigt den schematischen Aufbau der Faser, wobei im oberen Teil das Brechzahlprofil eingezeichnet ist. Die radialen Zonen der Faser und ihr Brechzahlprofil sind zur übersichtlicheren Darstellung nicht maßstabsgerecht eingezeichnet.

Die im wesentlichen zylindrische Faser hat einen Kern 1, um den sich eine zum Kern im wesentlichen konzentrische strahlungsleitende Zwischenschicht 2 befindet, die von einer zum Kern ebenfalls im wesentlichen konzentrisch angeordneten Schicht 3 umgeben ist. Die Schicht 3 kann noch von einer Bedeckung 5 aus einem der vielen bekannten für eine Faserumhüllung (Coating) geeigneten Materialien umgeben sein. Üblicherweise ist die Schicht 3 unmittelbar von einem aus Glas bestehenden Mantel 4 umgeben, der die Schicht 3 vor mechanischen Beschädigungen schützt; bei entsprechender Ausbildung der Schicht 5 kann auf die Schicht 4 auch verzichtet werden.

Der Kern 1 , die strahlungsleitende Zwischenschicht 2 und die Schicht 3 bestehen vorzugsweise aus Glas. Die Brechzahl des Kerns $n_1$, die der strahlungsleitenden Zwischenschicht $n_2$ und die Brechzahl $n_3$ der Schicht 3 nehmen radial von innen nach außen ab, d.h. $n_1$ ist größer als $n_2$ und $n_2$ ist größer als $n_3$. Der Absorptionskoeffizient des Kerns 1 ist kleiner als 0,05 $m^{-1}$ und der strahlungsleitenden Zwischenschicht 2 ist kleiner als 0,25

$m^{-1}$; für die Schicht 3 werden relativ hochabsorbierende Materialien zugelassen, es ist aber wenig sinnvoll, wenn ihr Absorptionskoeffizient 20 $m^{-1}$ übersteigt.

Der Kern 1, die strahlungsleitende Zwischenschicht 2 und die Schicht 3 werden nachfolgend als optisch wirksame Schichten der Faser bezeichnet. Im Prinzip können zur Beschreibung der Erfindung die Brechzahlen der optisch wirksamen Schichten verwendet werden. Für die Praxis ist das aber unzweckmäßig, z.B. weil die exakten Brechzahlen an der Faser nur umständlich zu messen sind. Der Fachmann verwendet stattdessen den Begriff der Numerischen Apertur und ist z.B. aufgrund seiner Erfahrung in der Lage, anhand einer vorgegebenen Numerischen Apertur die Faserbestandteile so zusammenzusetzen, daß sich die richtigen Brechzahlen bzw. Brechzahlverhältnisse ergeben. Die durch die Brechzahldifferenz zwischen der strahlungsleitenden Zwischenschicht 2 und dem Kern 1 bestimmte Numerische Apertur ist $NA_1 = (n_1^2 - n_2^2)^{1/2}$ und die durch die Brechzahldifferenz zwischen der Schicht 3 und der strahlungsleitenden Zwischenschicht 2 bestimmte Numerische Apertur ist $NA_2 = (n_2^2 - n_3^2)^{1/2}$. Ferner wird unter der Numerischen Apertur $NA_3$ der Faser der durch die Brechzahldifferenz zwischen der Schicht 3 und der strahlungsleitenden Zwischenschicht bestimmte Wert $NA_3 = (n_1^2 - n_3^2)^{1/2}$ verstanden. Zwischen den so definierten Werten für die Numerische Apertur besteht also der folgende einfache Zusammenhang: $NA_3 = (NA_1^2 + NA_2^2)^{1/2}$.

Um Strahlung mit einem Strahlprodukt $(\theta \cdot D)$ in rad·m mit einer Faser zu übertragen, die mit einem Radius biegbar ist, der größer oder gleich dem durch die Anwendungen geforderten Wert $R_{min}$ in m ist, ohne daß die vom Kern 1 geführte Strahlung durch biegungsinduzierte Verluste wesentlich geschwächt wird, beträgt die Numerische Apertur $NA_1 = (n_1^2 - n_2^2)^{1/2}$ den 1,5- bis 2,9fachen Wert von $(\theta \cdot D/R_{min})^{1/3}$. Ist $NA_1$ kleiner als der 1,5fache Wert von $(\theta \cdot D/R_{min})^{1/3}$, werden die Strahlführungseigenschaften des Kerns 1 zu schlecht, um in ihm hohe Strahlungsleistungen sicher übertragen zu können. Ist dagegen $NA_1$ größer als das 2,9fache von $(\theta \cdot D/R_{min})^{1/3}$, sind die Strahlführungseigenschaften zwar sehr gut, der Durchmesser des Kerns ist dann jedoch so klein, daß die Gefahr seiner Zerstörung besteht, wenn in ihn hohe Strahlungsleistungen eingekoppelt werden.

Kann $NA_1$ größer sein als das 1,6fache von $(\theta \cdot D/R_{min})^{1/3}$, wird dieser Wert bevorzugt, weil sich dadurch bessere Strahlführungseigenschaften und fertigungstechnische Vereinfachungen ergeben. Kann $NA_1$ sogar größer sein als das 1,75fache von $(\theta \cdot D/R_{min})^{1/3}$, wird dieser Wert noch stärker bevorzugt. Sollen sehr hohe Strahlungs-Spitzenleistungen, etwa mehr als 1 kW, übertragen werden soll, wird es zur Erreichung einer höheren Betriebssicherheit bevorzugt, daß $NA_1$ kleiner als das 2,7fache von $(\theta \cdot D/R_{min})^{1/3}$ ist, insbesondere, daß $NA_1$ kleiner als das 2,5fache von $(\theta \cdot D/R_{min})^{1/3}$ ist.

Um zu vermeiden, daß infolge von Mikrokrümmungsverlusten ein wesentlicher Teil der Strahlung aus dem Kern *1* in die strahlungsleitende Zwischenschicht *2* übergekoppelt wird, soll $NA_1$ aber eine bestimmte Untergrenze nicht unterschreiten: $NA_1$ soll größer sein als 0,05, vorzugsweise sogar größer als 0,07. Die beschriebenen Fasern sind deshalb für manche Anwendungsfälle ungeeignet. Ein derartiger Fall liegt vor, wenn $(\theta \cdot D)/R_{min}$ kleiner als $5 \cdot 10^{-6}$ ist.

Der Durchmesser $D_1$ des Kerns *1* in m beträgt das 0,45- bis 0,65fache von $(\theta \cdot D)/NA_1$, wobei der engere Bereich des 0,45- bis 0,55fachen von $(\theta \cdot D)/NA_1$ bevorzugt wird. Für den bevorzugten Bereich für $D_1$ von $(0,45...0,55) \cdot (\theta \cdot D)/NA_1$ könnte jedoch der Herstellungs- oder Anpassungsspielraum der Fasern zu gering sein. Das gilt insbesondere, wenn das Strahlprofil der Laserstrahlung schwankt. Dann wird für $D_1$ ein Wert aus dem weiteren Bereich von $(0,45...0,65) \cdot (\theta \cdot D)]NA_1$ verwendet. Über $0,65 \cdot (\theta \cdot D)/NA_1$ wird nicht hinausgegangen, weil dann die Quali tät Strahlung durch die Übertragung stark verschlechtert werden würde. Der Wert von $0,45 \cdot (\theta \cdot D)/NA_1$ wird nicht unterschritten, weil dann schon bei der Einkopplung der Strahlung in die Faser zwangsläufig ein großer Teil der Strahlung in die strahlungsleitende Zwischenschicht *2* eingekoppelt werden würde.

Der Durchmesser $D_1$ soll kleiner sein als $10^{-3}$ m. Sonst wäre, da der Kern *1* noch mindestens von der strahlungsleitenden Zwischenschicht *2* und der Schicht *3* sowie ggf. dem Mantel *4* umgeben ist, der Gesamtdurchmesser der Faser für die Handhabung zu groß. Um die Strahlung von Leistungslasern mit hoher Effizienz in den Kern einkoppeln zu können, ist es weiter erforderlich, daß $D_1$ mindestens $4 \cdot 10^{-5}$ m beträgt. Sonst wären zu viele optische Komponenten zur Strahlungseinkopplung notwendig.

Zur Übertragung von hohen Strahlungsleistungen ist es i. allg. erforderlich, daß der Kern *1* der Faser Multimodestrahlung führen kann. Dazu muß $D_1 \cdot NA_1/\lambda$ größer als 0,8 sein, wobei $\lambda$ die Wellenlänge der Laserstrahlung in m bezeichnet (für die meisten in Frage kommenden Laser bewegt sich die Strahlungswellenlänge im Bereich von etwa $5 \cdot 10^{-7}$ m bis $1,1 \cdot 10^{-6}$ m). In der Praxis ist diese Bedingung bei den Fasern dieser Erfindung erfüllt.

Durch Verwendung dieser Werte für $NA_1$ und $D_1$ wird folgendes erreicht:
- Die Faser läßt sich mit dem Radius $R_{min}$ biegen, ohne daß durch biegungsinduzierte Strahlungsverluste die in den Kern *1* eingekoppelte Strahlungsleistung wesentlich abgeschwächt wird.

- Der Durchmesser $D_1$ des Kerns *1* wird unter den gegebenen Randbedingungen, Einkopplung von Strahlung mit dem Strahlprodukt $(\theta \cdot D)$ und Biegbarkeit der Faser mit dem Radius $R_{min}$, maximal groß. Deshalb hat die Faser bei richtiger Einkoppelgeometrie eine hohe Zerstörschwelle.
- Das Produkt aus der Numerischen Apertur $NA_1$ und dem Durchmesser $D_1$ reicht aus, um fast die gesamte Strahlung mit dem Strahlprodukt $(\theta \cdot D)$ in den Kern *1* einkoppeln und in ihm übertragen zu können.

Eine gewöhnliche Stufenindexfaser (d.h. eine Faser ohne strahlungsleitende Zwischenschicht *2*) mit der Numerischen Apertur $NA = NA_1$ und dem Kerndurchmesser $D = D_1$ könnte u. U. schon geeignet sein, Strahlung mit guter Strahlqualität zu übertragen. Sie hätte jedoch erhebliche Nachteile - i. allg. ergeben sich ungewöhnlich kleine Werte für NA und große Werte für D. Infolgedessen treten bei Faserbiegungen große Übergangsverluste auf und es ist damit zu rechnen, daß schon bei der Einkopplung ein Teil der Strahlung nicht vom Kern eingefangen wird. Weil bei gewöhnlichen Fasern die Übergangs- und Einkoppelverluste lokalisiert auftreten, würde die Faser bei der Übertragung von Laserstrahlung mit hoher Leistung wahrscheinlich zerstört werden. Um das Risiko im technisch vertretbaren Rahmen halten, lassen sich gewöhnliche Fasern deshalb meistens nicht im Sinne dieser Erfindung optimieren (Anpassung an das Strahlprodukt, Erreichen des vorgegebenen Biegeradius, großer Kerndurchmesser).

Durch die strahlungsleitende Zwischenschicht *2* wird die Strahlführung sicherer: Strahlung, die bei der Einkopplung, durch Biegungen oder Mikrokrümmungen den Kern *1* verläßt, wird in der strahlungsleitenden Zwischenschicht *2* geführt. Dieser Teil der Strahlung wird günstigenfalls wieder vom Kern *1* eingefangen oder in der strahlungsleitenden Zwischenschicht *2* bis zum Faserende geführt und dort ausgekoppelt. Es kann aber auch in Kauf genommen werden, daß ein Teil dieser Strahlung z.B. durch Biegungs- oder Mikrokrümmungsverluste lateral der strahlungsleitenden Zwischenschicht *2* ausgekoppelt wird, d.h. lateral ganz aus der Faser aus gekoppelt wird. Durch die Bemaßung der strahlungsleitenden Zwischenschicht *2* gemäß dieser Erfindung wird aber erreicht, daß diese Auskoppelverluste schwach sind und nicht lokalisiert auftreten sondern auf langen Faserabschnitten verteilt sind. Der ausgekoppelte Teil der Strahlung führt nicht zu Zerstörungen oder erfor dert eine weniger aufwendige Kühlung bei der Übertragung von Strahlung mit hoher Leistung: Die Auskoppelverluste sind unkritischer für das Fasersystem bzw. ungefährlicher für die Umgebung als bei gewöhnlichen Fasern.

Der Wert für die durch die Brechzahldifferenz zwischen der strahlungsleitenden Zwischenschicht *2* und der Schicht *3* bestimmte Numerische Apertur( $NA_2 = (n_2^2 - n_3^2)^{1/2}$ beträgt den einfachen bis doppelten Wert von $NA_1$. Damit reicht $NA_2$ aus, um Strahlung, die z.B. infolge von Biegungs- oder Mikrokrümmungsverlusten den Kern *1* verläßt, in der strahlungsleitenden Zwischenschicht *2* sicher einzuschließen. Um zu vermeiden, daß die laterale Auskopplung aus der Zwischenschicht *2* zu groß wird, ist $NA_2$ größer als $NA_1$. Dann ist nämlich der der zu $NA_2$ proportionale Totalreflexionswinkel an der Grenzfläche zwischen der Schicht *3* und der strahlungsleitenden Zwischenschicht *2* größer als der zu $NA_1$ proportionale Totalreflexionswinkel an der .Grenzfläche zwischen der strahlungsleitenden Zwischenschicht *2* und dem Kern *1*. Hierfür wäre zwar prinzipiell ein möglichst großer Wert für $NA_2$ günstig - da aber schon der Kern *1* gute Strahlführungseigenschaften hat, ist es kaum notwendig, daß $NA_2$ den Wert von $NA_1$ um mehr als das Doppelte übersteigt. Andererseits kann aber auch angestrebt werden, daß die Strahlung aus der strahlungsleitenden Zwischenschicht *2* allmählich, d.h. auf ausreichend lange Faserabschnitte, ausgekoppelt wird, um die thermische Belastung der Faser zu minimieren. Dazu kann es sinnvoll sein, daß $NA_2$ kleiner ist als das Doppelte von $NA_1$.

Ist $NA_2$ größer als $NA_1$, kann am Auskoppelende der u. U. günstige Effekt auftreten, daß die von der strahlungsleitende Zwischenschicht *2* geführte Strahlung die Faser unter einem größeren Divergenzwinkel verläßt als die vom Kern *1* geführte Strahlung. Damit ergeben sich einfache Möglichkeiten, die Strahlung der strahlungsleitende Zwischenschicht *2*, die sich naturgemäß schlechter fokussieren läßt als die Strahlung des Kerns *1* und die daher bei den Anwendungen stören könnte, aus dem Strahl herauszufiltern. Techniken zum Herausfiltern dieser Strahlung wie beispielsweise das sog. "spatial filtering" sind bekannt.

Für die Numerischen Aperturen gilt $NA_3 = (NA_1^2 + NA_2^2)^{1/2}$, wobei sich in der Praxis für $NA_3$ meistens Werte von 0,18 bis 0,32 ergeben. $NA_3 = (n_1^2 - n_3^2)^{1/2}$ ist jedoch durch den Fertigungsprozeß (chemische Zusammensetzung der Faser) in an sich bekannter Weise begrenzt: $NA_3$ ist kleiner als eine Obergrenze $NA_{max}$, die für jeden Fasertyp (verwendete Materialien) und Spektralbereich verschieden ist und als maximale Numerische Apertur eines Fasertyps bezeichnet werden kann.

Aufgrund der Beschränkung des Wertes für $NA_3$ durch die maximale Numerische Apertur $NA_{max}$ des Fasertyps läßt sich nicht in jedem Fall (bestimmte Fasermaterialien und Herstellungsprozeß) jeder beliebig kleine Biegeradius mit einer Faser eines bestimmten Typs erreichen. Ein derartiger Fall liegt z.B. dann vor, wenn der Quotient $(\theta \cdot D)/R_{min}$ größer als etwa $0,1 \cdot NA_{max}^3$ ist. Mit den bevorzugten Fasern, bei denen $NA_1$ größer sein

soll als das etwa 1,6fache von $(\theta \cdot D/R_{min})^{1/3}$, läßt sich der Biegeradius $R_{min}$ sogar nur erreichen, wenn $(\theta \cdot D)/R_{min}$ kleiner als $0,08 \cdot \cdot NA_{max}^3$ ist, und mit den stärker bevorzugten Fasern schließlich, bei denen $NA_1$ größer sein soll als das 1,75fache von $(\theta \cdot D/R_{min})^{1/3}$, läßt sich der Biegeradius $R_{min}$ nur erreichen, wenn $(\theta \cdot D)/R_{min}$ kleiner als $0,06 \cdot \cdot NA_{max}^3$ ist.

Der Außendurchmesser $D_2$ in m der strahlungsleitenden Zwischenschicht *2* ist kleiner als $0,15 \cdot R_{min} \cdot NA_2^2$, bevorzugt kleiner als $0,12 \cdot R_{min} \cdot NA_2^2$, insbesondere kleiner sogar als $0,09 \cdot R_{min} \cdot NA_2^2$. $D_2$ kann meistens deutlich größer sein als der Durchmesser $D_1$ des Kerns *1*. Wird in Kauf genommen, daß bei der Einkopplung ein Teil der Strahlung in die strahlungsleitende Zwischenschicht *2* eingekoppelt wird, kann infolgedessen zugelassen werden, daß auf der Eintrittsfläche der Faser der Durchmesser des Laserstrahls größer ist als der Durchmesser des Kerns. Dadurch läßt sich die Strahlungsintensität auf der Eintrittsfläche reduzieren.

Es kann jedoch der Fall eintreten, daß auch Werte für $D_2$ zulässig sind, die größer als $1,25 \cdot 10^{-3}$ m sind. Da sich auf der strahlungsleitenden Zwischenschicht *2* noch die Schicht 3 und der Mantel *4* befinden, würde dann der Gesamtdurchmesser der Faser sehr groß werden. Fasern mit großem Gesamtdurchmesser sind zwar herstellbar und u. U. auch verwendbar, sie sind jedoch unhandlich und bei Biegungen bruchgefährdet. Deshalb ist $D_2$ kleiner als $1,25 \cdot 10^{-3}$ m und bevorzugt kleiner als $10^{-3}$ m.

Die auf der strahlungsleitenden Zwischenschicht unmittelbar aufliegende Schicht *3* soll zwar möglichst dünn sein, um die mechanischen Eigenschaften der Faser zu verbessern. Sie muß aber ausreichend dick sein, um die Strahlung sicher einzuschließen. Deshalb ist die Dicke dieser Schicht *3* in m größer als $0,1 \cdot \lambda/NA_2$, vorzugsweise größer als $0,2 \cdot \lambda/NA_2$, wobei $\lambda$ die Wellenlänge (bezogen auf das Vakuum) der mit der Faser zu übertragenden Strahlung bezeichnet. Das Herstellen von Fasern mit sehr dünnen Mantelschichten, insbesondere wenn die Brechzahl dieser Schichten genau eingehalten werden soll, kann aber fertigungstechnisch sehr aufwendig sein. Es wird deshalb bevorzugt, daß die Dicke der Schicht *3* und des Mantels *4* im fertigungstechnisch günstigeren Bereich von $5 \cdot 10^{-6}$ m bis $25 \cdot 10^{-6}$ m liegt, also ein Vielfaches der Strahlungswellenlänge beträgt. Im allgemeinen werden die mechanischen Eigenschaften der Faser dann noch nicht beeinträchtigt.

Im Prinzip kann man statt nur einer Schicht *3* auch ein aus mehreren radialen Schichten bestehendes Schichtenpaket verwenden, welches z.B. wie ein dielektrischer Spiegel funktioniert und eine noch sicherere Einschließung von Strahlung in die strahlungsleitende Zwischenschicht 2 bewirkt. Die Schicht 3 kann auch ein von innen nach außen ansteigendes Gradientprofil besitzen, wobei $n_3$ durch den Brechungsindex des an die Schicht 2 angrenzenden Teils der Schicht 3 bestimmt wird. Diese Ausführungsformen brächten aber im Vergleich zur beschriebenen Faser kaum noch Vorteile. Hingegen wären sehr enge Toleranzen bei der Herstellung der Faser einzuhalten, so daß der Fertigungsprozeß unverhältnismäßig aufwendiger werden würde.

Durch die Fertigung bedingte Exzentrizitäten und geringe Abweichungen des Brechzahlprofils der Faser von der Zylindersymmetrie und geringfügige Schwankungen des Brechzahlprofils an den Grenzflächen zwischen den verschiedenen optisch wirksamen Zonen der Faser und der sog. "Dip" im Zentrum des Kerns (durch das Kollabieren der Faservorform hervorgerufenen Brechzahlabsenkung) beeinträchtigen die Strahlführungseigenschaften der beschriebenen Faser nur unwesentlich und können deshalb in die Erfindung als einbezogen betrachtet werden.

Es wird weiter in die Erfindung als einbezogen betrachtet, daß das Querschnittsprofil der Faser im Bereich ihres Ein- oder Auskoppelendes verformt wird (sog. "Tapern"), um es dem Strahlprofil der einzukoppelnden Strahlung anzupassen bzw. um das Profil der ausgekoppelten Strahlung dem für die Anwendungen gewünschten Strahlprofil anzupassen oder um die Oberflächenintensität an den Faserendflächen zu reduzieren. Eine derartige Verformung läßt sich durch eine thermoplastische Verformung der Faser an den Enden erreichen.

Ferner wird in die Erfindung als einbezogen vorausgesetzt, daß die Schicht 3 mit Zusatzstoffen dotiert ist, die eine verstärkte Absorption der Laserstrahlung bewirken. Damit kann erreicht werden, daß die aus dem Kern ausgekoppelte Strahlung bei den Reflexionen an der Grenzfläche zwischen der strahlungsleitenden Zwischenschicht 2 und und der Schicht 3 absorbiert wird, um eine definierte Umwandlung der Leckstrahlung in Wärme erreichen.

Die geschliffenen und polierten Ein- und Auskoppelflächen der Faser (Faserendflächen) sind möglichst senkrecht zur Faserachse ausgerichtet. Die Bearbeitung der Endflächen von optischen Fasern mit der erforderlichen optischen Qualität ist Stand der Technik. Es wird in die Erfindung einbezogen, daß die Faserendflächen mit anti-Reflexionsbeschichtungen (AR-Schichten) versehen sind oder daß das Volumen zwischen der Einkoppeloptik und der Faser mit einer Immersionsflüssigkeit aufgefüllt ist, um die Einkoppelverluste durch Oberflächenreflexionen zu reduzieren.

Die Strahlung wird so in den Kern 1 so eingekoppelt, daß er möglichst vollständig ausgeleuchtet und möglichst gleichmäßig bestrahlt wird. Dabei soll der überwiegende Teil der Strahlung in den Kern 1 gelangen. Dabei darf zwar ein Teil der Strahlung in die strahlungsleitende Zwischenschicht 2 gelangen - zur Erreichung einer höheren Übertragungseffizienz und besserer Strahlqualität der übertragenen Strahlung ist es jedoch günstiger, eine möglichst vollständige Einkopplung der Strahlung in den Kern 1 zu erreichen. Die Strahlachse des in die Faser einzukoppelnden Laserstrahls ist weitestgehend parallel zur Faserachse ausgerichtet. Der Winkelbereich der einzukoppelnden Strahlung, das ist der volle Divergenzwinkel oder der volle Konvergenzwinkel der Strahlung an der Einkoppelfläche bezogen auf die Flächennormale der Einkoppelfläche, ist kleiner als der doppelte Wert von $NA_2$ und bevorzugt kleiner als der doppelte Wert von $NA_1$. Die Realisation dieser Einkoppelbedingungen bzw. -geometrie ist Stand der Technik.

Im Wellenlängenbereich unterhalb von etwa $2{,}5 \cdot 10^{-7}$ m gibt es zwar leistungsstarke Strahlungsquellen (z.B. Excimer-Laser und anti-Stokes-verschobene Raman-Laser), für diese besteht zur Zeit aber kein Bedarf an faseroptischen Strahlführungssystemen, die im Sinne dieser Erfindung optimiert sind. Außerdem kann für diesen Spektralbereich die Schwierigkeit auftreten, daß zur Zeit keine geeigneten Fasermaterialien zur Verfügung stehen. Bei Vorhandensein geeigneter Fasermaterialien läßt sich gemäß der Erfindung auch für diesen Spektralbereich eine optimierte Faser herstellen.

Im Wellenlängenbereich von etwa $2{,}5 \cdot 10^{-7}$ m bis etwa $2 \cdot 10^{-6}$ m gibt es eine Reihe von Lasern mit hoher Strahlungsleistung (z.B. Nd-, Farbstoff-, Metalldampf- und Excimer-Laser), für deren Übertragung eine im Sinne dieser Erfindung beschriebene Faser in Frage kommt. Für diesen Spektralbereich wird eine Faser bevorzugt, deren optisch wirksamen Zonen (der Kern 1, die strahlungsleitende Zwischenschicht 2 und die Schicht 3) bis auf unwesentliche Beimischungen nur aus $SiO_2$, Fluor-dotiertem $SiO_2$ ($F{:}SiO_2$) sowie aus $SiO_2$ bestehen, das ggf. in an sich bekannter Weise $GeO_2$, $B_2O_3$, $P_2O_5$, $Al_2O_3$, $TiO_2$, $Ta_2O_5$ oder $ZrO_2$ enthalten kann. Der überwiegende Bestandteil soll dabei $SiO_2$ sein, das eine Brechzahl von etwa 1,46 hat (die Brechzahlen hängen von der Strahlungswellenlänge ab). Durch Fluor-Dotierung bzw. durch $B_2O_3$-Beimischungen im technisch sinnvollen Rahmen läßt sich die Brechzahl von $SiO_2$ senken, die übrigen Beimischungen zum $SiO_2$ wirken brechzahlerhöhend. Die Herstellung von optischen Fasern aus diesen Materialien ist Stand der Technik, die Weiterentwicklung bzw. Optimierung der Herstellungstechniken ist kein Gegenstand dieser Erfindung.

$TiO_2$, $ZrO_2$ und $Ta_2O_5$ wirken in $SiO_2$ stark brechzahlerhöhend und kämen als Bestandteile des Kerns 1 in Frage. Da diese Materialien aber zugleich die Strahlungsdämpfung (Absorption) des

$SiO_2$ erhöhen, ist ihre Verwendung für den Kern von Fasern zur Leistungsübertragung wenig sinnvoll. Nach Möglichkeit sollen die optisch wirksamen Zonen der Faser deshalb überwiegend, bis auf unwesentliche Beimischungen, nur aus $SiO_2$, $F:SiO_2$ oder $SiO_2$ mit $GeO_2$, $B_2O_3$ oder $P_2O_5$ bestehen.

Es wird am stärksten bevorzugt, daß die optisch wirksamen Zonen der Faser bis auf unwesentliche Beimischungen nur aus $SiO_2$ und $F:SiO_2$ bestehen, weil für diese Materialien hohe Zerstörschwellen und hohe Schwellwerte für nichtlineare optische Effekte (z.B. der stimulierte Ramaneffekt) gefunden wurden. Insbesondere soll hierbei der Kern $1$ aus reinem $SiO_2$ bestehen und die zur Erzeugung der Numerischen Apertur $NA_1$ notwendige Brechzahldifferenz zwischen Kern $1$ und strahlungsleitender Zwischenschicht $2$ durch die Fluor-Dotierung der Zwischenschicht $2$ eingestellt werden und die zur Erzeugung der Numerischen Apertur $NA_2$ notwendige Brechzahldifferenz zwischen strahlungsleitender Zwischenschicht $2$ und Schicht $3$ durch eine stärkere Fluor-Dotierung der Schicht $3$ eingestellt werden.

Wenn man dabei für die Fluor-Dotierung der Schicht $3$ den technisch bequem erreichbaren Wert zuläßt, läßt sich mit der Faser für $NA_{max}$ ein Wert von etwa 0,24 erreichen. Für diese Fasern könnte man für $NA_1$ einen Wert von fast 0,17 erreichen, es ist jedoch sinnvoll, $NA_1$ auf 0,16 zu beschränken. Diese Ausführungsform ist daher nur möglich, wenn der Quotient $(\theta \cdot D)/R_{min}$ aus dem Strahlprodukt der in die Faser einzukoppelnden Strahlung $(\theta \cdot D)$ und dem von der Faser geforderten minimalem Biegeradius $R_{min}$ kleiner als etwa $1,2 \cdot 10^{-3}$ ist. Die bevorzugte Ausführung, bei der $NA_1$ größer als das 1,6fache von $(\theta \cdot D/R_{min})^{1/3}$ ist, ist möglich, wenn $(\theta \cdot D)/R_{min}$ kleiner als etwa $0,98 \cdot 10^{-3}$ ist, und die stärker bevorzugte Ausführung, bei der $NA_1$ größer als das 1,75fache von $(\theta \cdot D/R_{min})^{1/3}$ ist, ist möglich, wenn $(\theta \cdot D)/R_{min}$ kleiner als etwa $0,74 \cdot 10^{-3}$ ist.

Wenn man für die Fluor-Dotierung der Schicht $3$ den technisch sinnvollen Wert zuläßt, läßt sich mit der Faser für $NA_{max}$ sogar ein Wert von etwa 0,28...0,30 erreichen. Normalerweise wird dies zwar vermieden, weil durch die starke Fluor-Dotierung die Eigenschaften des Fasermaterials verschlechtert werden (z.B. Blasenbildung, mechanische Eigenschaften). Bei den Fasern dieser Erfindung kann jedoch die stark dotierte Schicht $3$ sehr dünn gehalten werden und dadurch vermieden werden, daß sich die nachteiligen Eigenschaften auswirken. Außerdem erreicht die Strahlung diese Schicht mit einer abgeschwächten Intensität (bzgl. der im Kern $1$), dadurch kann vermieden werden, daß sich z.B. eine Lichtstreuung durch Blasen entscheidend auswirkt. Eine weitere Möglichkeit, den Wert für $NA_{max}$

über 0,24 hinaus zu erhöhen ist, der Schicht $3$ zusätzlich $B_2O_3$ beizumischen. Zwar reduzieren $B_2O_3$-Beimischungen ebenfalls die Belastbarkeit des Fasermaterials, außerdem hat $B_2O_3$ einige Absorptionsbanden im nah-infraroten Spektralbereich, da aber der Kern $1$ und die strahlungsleitende Zwischenschicht $2$ der Faser, die durch die Strahlung am stärksten belastet werden, weiterhin im wesentlichen nur aus $SiO_2$ und (schwächer dotiertem) $F:SiO_2$ bestehen, können mit dieser Ausführung ebenfalls hohe Schadensgrenzwerte und hohe Schwellwerte für unerwünschte nichtlineare optische Prozesse erreicht werden. Jedoch ist die brechzahlsenkende Wirkung des $B_2O_3$ in $SiO_2$ und $F:SiO_2$ nur gering. Diese Ausführung läßt sich deshalb, wenn man die $B_2O_3$-Beimischungen im technisch sinnvollen Rahmen hält, ebenfalls nur anwenden, wenn für $NA_{max}$ ein Wert von etwa 0,30 ausreicht. Für die beiden letztgenannten Fasertypen (stark dotierte $F:SiO_2$-Faser und $B_2P_3$-dotierte Faser) könnte man für $NA_1$ einen Wert von 0,21 erreichen, es ist jedoch sinnvoll, $NA_1$ auf 0,20 zu beschränken. Diese Ausführungen sind daher nur möglich, wenn $(\theta \cdot D)/R_{min}$ kleiner als etwa $2,4 \cdot 10^{-3}$ ist. Die bevorzugten Ausführungen, bei denen $NA_1$ größer als das 1,6fache von $(\theta \cdot D/R_{min})^{1/3}$ ist, sind möglich, wenn $(\theta \cdot D)/R_{min}$ kleiner als etwa $1,9 \cdot 10^{-3}$ ist, und die stärker bevorzugten Ausführungen, bei denen $NA_1$ größer als das 1,75fache von $(\theta \cdot D/R_{min})^{1/3}$ ist, sind möglich, wenn $(\theta \cdot D)/R_{min}$ kleiner als etwa $1,44 \cdot 10^{-3}$ ist.

Wenn für die Numerische Apertur $NA_3$ bzw. $NA_{max}$ ein Wert von 0,24 bis 0,30 nicht ausreicht, kann der Kern $1$ auch $GeO_2$-Beimischungen enthalten. Um diese Beimischungen aber im technisch sinnvollen Rahmen zu halten, soll diese Ausführungsform nur angewendet werden, wenn für $NA_3$ bzw. $NA_{max}$ ein Wert von mehr als 0,35 nicht erforderlich ist. Damit könnte man für $NA_1$ einen Wert von fast 0,25 erreichen, es ist jedoch sinnvoll, wenn $NA_1$ auf 0,23 zu beschränken. Diese Ausführung ist daher nur möglich, wenn der Quotient $(\theta \cdot D)/R_{min}$ kleiner als etwa $3,6 \cdot 10^{-3}$ ist. Die bevorzugte Ausführung, bei der $NA_1$ größer als das 1,6fache von $(\theta \cdot D/R_{min})^{1/3}$ ist, ist möglich, wenn $(\theta \cdot D)/R_{min}$ kleiner als etwa $2,9 \cdot 10^{-3}$ ist, und die stärker bevorzugte Ausführung, bei der $NA_1$ größer als das 1,75fache von $(\theta \cdot D/R_{min})^{1/3}$ ist, ist möglich, wenn $(\theta \cdot D)/R_{min}$ kleiner als etwa $2,2 \cdot 10^{-3}$ ist.

Wenn für die Numerische Apertur $NA_3$ bzw. $NA_{max}$ ein Wert von 0,35 auch noch nicht ausreicht, kann dem Kern $1$ außerdem $P_2O_5$ beigemischt werden. Um diese Beimischungen im technisch sinnvollen Rahmen zu halten, soll diese Ausführungsform aber nur angewendet werden, wenn ein Wert für $NA_{max}$ von weniger als 0,40 ausreicht. Damit könnte man für $NA_1$ einen Wert von 0,28 erreichen, hier ist jedoch sinnvoll, $NA_1$ auf 0,27 zu beschränken. (Fasern mit einem Wert für $NA_1$ oberhalb von etwa 0,27 wären außerdem unpraktisch, weil für sie die Ein- und Auskopplung der Strahlung zu aufwendig werden würde.). Diese Ausführung ist daher nur möglich, wenn $(\theta \cdot D)/R_{min}$ kleiner als etwa $5,9 \cdot 10^{-3}$ ist. Die bevorzugte Ausführungsform, bei der $NA_1$ größer als das 1,6fache von $(\theta \cdot D/R_{min})^{1/3}$ ist, ist möglich, wenn $(\theta \cdot D)/R_{min}$ kleiner als etwa $4,7 \cdot 10^{-3}$ ist, und die stärker bevorzugte Ausführung schließlich, bei der $NA_1$ größer sein soll als das 1,75fache von $(\theta \cdot D/R_{min})^{1/3}$ ist, ist möglich, wenn $(\theta \cdot D)/R_{min}$ kleiner als etwa $3,5 \cdot 10^{-3}$ ist.

Durch die $GeO_2$- und $P_2O_5$-Beimischungen muß allerdings in Kauf genommen werden, daß die Schadensschwellwerte und die Schwellwerte für nichtlineare optische Prozesse wesentlich abnehmen, diese Fasertypen kommen deshalb nur für niedrigere Strahlungsleistungen bzw. für kürzere Übertragungslängen in Frage. Ferner wird deshalb bei den letzten beiden Ausführungsformen bevorzugt, daß in der Schicht 3 die Fluor-Dotierung oder die $B_2O_3$-Beimischung den näherungsweise technisch maximal erreichbaren oder sinnvollen Wert aufweisen. Dadurch wird erreicht, daß die zusätzlichen Beimischungen des Kerns 1 gering sein können.

Im Wellenlängenbereich von etwa $2 \cdot 10^{-6}$ m bis etwa $4 \cdot 10^{-6}$ m gibt es eine Reihe von Lasern mit hoher Strahlungsleistung (z.B. Er-Laser mit einer Strahlungswellenlänge um $2,9 \cdot 10^{-6}$ m), für deren Übertragung eine im Sinne dieser Erfindung beschriebene Faser in Frage kommt. Für Strahlung im Spektralbereich von etwa $2 \cdot 10^{-6}$ m bis etwa $4 \cdot 10^{-6}$ m wird eine Faser bevorzugt, deren optisch wirksame Zonen (Kern 1, strahlungsleitende Zwischenschicht 2 und Schicht 3) im wesentlichen aus Gemischen von Fluoridgläsern, vorzugsweise aus $ZrF_4$, $HfF_4$, $LaF_3$, $AlF_3$, $GdF_3$, $BaF_2$, LiF, NaF und YF bestehen und stärker bevorzugt nur den Schwermetallfluoridgläsern $ZrF_4$, $HfF_4$, $BaF_,$, $LaF_3$ und $AlF_3$ bestehen.

Da zur Zeit die Fertigungstoleranzen für Fluoridglasfasern größer sind als für Kieselglasfasern, ist bei ihnen mit stärkeren Mikrokrümmungsverlusten zu rechnen. Um zu vermeiden, daß infolge von Mikrokrümmungsverlusten ein wesentlicher Teil der Strahlung aus dem Kern 1 in die strahlungsleitende Zwischenschicht 2 übergekoppelt wird, ist $NA_1$ größer als 0,07. Die Fasern sind deshalb ungeeignet, wenn $(\theta \cdot D)/R_{min}$ kleiner als $1,4 \cdot 10^{-5}$ ist.

Bei den Fluoridglasfasern werden Typen bevorzugt, bei denen $NA_{max}$ höchstens 0,20 beträgt, weil sich dann das Verhältnis der Bestandteile in technisch gut zugänglichen Bereichen befindet. Für $NA_1$ könnte man dann einen Wert von fast 0,14 erreichen. Diese Ausführung ist daher nur möglich, wenn der Quotient $(\theta \cdot D)/R_{min}$ aus dem Strahlprodukt der in die Faser einzukoppelnden Strahlung $(\theta \cdot D)$ und dem von der Faser geforderten minimalem Biegeradius $R_{min}$ kleiner als etwa $8,2 \cdot 10^{-4}$ ist. Die bevorzugte Ausführung, bei der $NA_1$ größer als das 1,6fache von $(\theta \cdot D/R_{min})^{1/3}$ ist, ist möglich, wenn $(\theta \cdot D)/R_{min}$ kleiner als etwa $6,5 \cdot 10^{-4}$ ist, und die stärker bevorzugte Ausführung, bei der $NA_1$ größer als das 1,75fache von $(\theta \cdot D/R_{min})^{1/3}$ ist, ist möglich, wenn $(\theta \cdot D)/R_{min}$ kleiner als etwa $4,9 \cdot 10^{-4}$ ist.

Läßt man für das Verhältnis der Bestandteile der Fluoridgläser den technisch erreichbaren Wert zu, ist für $NA_{max}$ ein Wert von etwa 0,40 möglich (i. allg. wird diese Ausführung aber vermieden, weil dadurch die mechanischen Eigenschaften der Faser verschlechtert werden und die Strahlungsdämpfung der Fasermaterialien zunimmt). Hier ist es sinnvoll, $NA_1$ auf 0,25 zu beschränken. Diese Ausführung ist daher nur möglich, wenn $(\theta \cdot D)/R_{min}$ kleiner als etwa $4,6 \cdot 10^{-3}$ ist. Die bevorzugte Ausführungsform, bei der $NA_1$ größer als das 1,6fache von $(\theta \cdot D/R_{min})^{1/3}$ ist, ist möglich, wenn $(\theta \cdot D)/R_{min}$ kleiner als etwa $3,7 \cdot 10^{-3}$ ist, und die stärker bevorzugte Ausführung, bei der $NA_1$ größer als das 1,75fache von $(\theta \cdot D/R_{min})^{1/3}$ ist, ist möglich, wenn $(\theta \cdot D)/R_{min}$ kleiner als etwa $2,8 \cdot 10^{-3}$ ist.

Im Spektralbereich mit Wellenlängen von etwa $3 \cdot 10^{-6}$ m bis etwa $1,1 \cdot 10^{-5}$ m gibt es ebenfalls einige Laser mit hoher Strahlungsleistung (z.B. CO-Laser mit einer Strahlungswellenlänge um $5 \cdot 10^{-6}$ m und $CO_2$-Laser mit einer Strahlungswellenlänge um $10^{-5}$ m), für deren Übertragung eine Faser gemäß der Erfindung in Frage kommt, sofern die geforderten Brechzahlverhältnisse mit den Fasermaterialien verwirklicht werden können.

Als Fasermaterialien für diesen Spektralbereich kommen Fasern aus sog. Chalkogenidgläsern und Fasern aus polykristallinen Materialien, z.B. Cäsium- und Silberhalogenid-Kristalle (z.B. Gemische AgBr und AgJ), in Betracht. Neuwertige Fasern aus polykristallinen Materialien haben zwar den Vorteil, daß man mit ihnen sehr geringe Absorptionskoeffizienten erreichen kann - wenn diese Fasern jedoch altern oder starken mechanischen Beanspruchungen ausgesetzt werden (bei mechanischen Belastungen verformen sich diese Materialien meistens plastisch) kann der Absorptionskoeffizient um mehrere Ordnungen zunehmen. Chalkogenidglasfasern verhalten sich bei mechanischen Belastungen zwar elastisch und der Absorptionskoeffizient ist deshalb von der mechanischen Beanspruchung wenig abhängig, hier kann es jedoch insbesondere für den Spektralbereich mit Wellenlängen oberhalb von $10^{-5}$ m schwierig sein, überhaupt Chalkogenidgläser mit ausreichend niedrigen Absorptionskoeffizienten zu finden.

Insgesamt wird für Strahlung im Spektralbereich von etwa $3 \cdot 10^{-6}$ m bis etwa $1,1 \cdot 10^{-5}$ m

eine Faser bevorzugt, deren optisch wirksame Zonen (Kern *1*, strahlungsleitende Zwischenschicht *2* und Schicht *3*) im wesentlichen aus Gemischen von Chalkogenidgläsern, vorzugsweise Gemische überwiegend aus dem (As,Ge,Sb, Se,Te,In,S)-System (AsSe₃, AsS₃ usw.) besteht. Die Herstellung dieser Gläser und das Herstellen von Fasern aus diesen Gläsern ist bekannt.

Da die Fertigungstoleranzen für Chalkogenidglasfasern nochmals größer als die für Fasern aus Kieselglas sind, ist bei ihnen mit noch stärkeren Mikrokrümmungsverlusten zu rechnen. Um diese Verluste zu reduzieren, ist $NA_1$ größer als 0,09. Die Fasern sind deshalb ungeeignet, wenn $(\theta \cdot D)/R_{min}$ kleiner als $2,9 \cdot 10^{-5}$ ist.

Mit Chalkogenidglasgemischen lassen sich sehr große Brechzahlunterschiede zwischen den optisch wirksamen Zonen einer Faser erreichen (es läßt sich der Brechzahlbereich von etwa 2,55 bis etwa 2,95 abdecken). Deshalb lassen sich mit diesen Fasern große Werte für die Numerische Apertur bis zur physikalischen Obergrenze von etwa 1 erreichen. Es ist aber sinnvoll $NA_{max}$ auf etwa 0,40 zu beschränken. Damit könnte man für $NA_1$ einen Wert von 0,28 erreichen. Diese Ausführung ist daher nur möglich, wenn $(\theta \cdot D)/R_{min}$ kleiner als etwa $6,6 \cdot 10^{-3}$ ist. Die bevorzugte Ausführung, bei der $NA_1$ größer als das 1,6fache von $(\theta \cdot D/R_{min})^{1/3}$ ist, ist möglich, wenn $(\theta \cdot D)/R_{min}$ kleiner als etwa $4,7 \cdot 10^{-3}$ ist, und die stärker bevorzugte Ausführung, bei der $NA_1$ größer als das 1,75fache von $(\theta \cdot D/R_{min})^{1/3}$ ist, ist möglich, wenn $(\theta \cdot D)/R_{min}$ kleiner als etwa $3,5 \cdot 10^{-3}$ ist.

## Beispiel 1

Für Beschriftungszwecke soll die Strahlung eines gepulsten Nd-Lasers, Strahlungswellenlänge ≈ $1,06 \cdot 10^{-5}$ m, übertragen werden. Mit 100 kW bis 1 MW ist die Strahlungssleistung so hoch, daß die Ausführung mit der höchsten Zerstörschwelle verwendet werden soll, bei der die optisch wirksamen Zonen nur aus $SiO_2$ und $F:SiO_2$ bestehen.

Das Strahlprodukt $\theta \cdot D$ der Laserstrahlung beträgt etwa $4 \cdot 10^{-5}$ rad·m und die Faser soll mit einem Biegeradius $R_{min}$ von 0,1 m biegbar sein. Mit diesen Zahlenwerten findet man für $(\theta \cdot D)/R_{min}$ einen Wert von $4 \cdot 10^{-4}$. Da dieser Wert kleiner als $0,74 \cdot 10^{-3}$ ist, läßt sich die Strahlung tatsächlich mit der am stärksten bevorzugten Faser übertragen, deren optisch wirksamen Zonen aus $SiO_2$ und $F:SiO_2$ besteht, deren maximale Numerische Apertur $NA_{max}$ etwa 0,24 ist und für die $NA_1$ kleiner ist als 0,16.

Nach Anspruch 2 und 3 sollte $NA_1$ zwischen dem 1,75fachen und dem 2,5fachen von $(-(\theta \cdot D/R_{min})^{1/3}$ liegen, also zwischen 0,129 und 0,184 liegen, für eine Faser der obigen Zusammensetzung ist aber 0,16 der maximale Wert. Es wird eine Faser mit $NA_1 \approx 0,14$ verwendet, womit man einesteils der Forderung nach kleinen $NA_1$-Werten genügt, zum anderen aber noch einen durch die Fertigungstoleranzen geforderten Abstand vom Minimalwert hat.

Nach Anspruch 4 ist es bevorzugt, wenn der Durchmesser $D_1$ des Kerns zwischen $1,29 \cdot 10^{-4}$ m und $1,57 \cdot 10^{-4}$ m liegt; es wird der mittleren Wert von $1,45 \cdot 10^{-4}$ m verwendet, um einen Anpassungsspielraum zu haben. Weiter wird $NA_{max} \approx 0,24$ und $NA_2 \approx 0,19$ verwendet.

Für den Durchmesser $D_2$ der strahlungsleitenden Zwischenschicht wird der größere Wert nach Anspruch 1 von $0,12 \cdot R_{min} \cdot NA_2^2 \approx 4,3 \cdot 10^{-4}$ m verwendet, weil es für den beabsichtigten Anwendungszweck (Beschriftung) günstig ist, die Leckstrahlung des Kerns auf eine großflächige Zwischenschicht zu verteilen. Nach der optischen Abbildung der Leckstrahlung auf das Werkstück wird mit ihr dort dann nicht die für die Beschriftung notwendige Schwellintensität erreicht.

## Beispiel 2

Es soll für die Materialbearbeitung die Strahlung eines Nd:YAG-Lasers, Strahlungswellenlänge $1,064 \cdot 10^{-6}$ m, mit einem zeitlich stabilen Strahlprofil mit einer Faser übertragen werden. Die Strahlungsleistung dieses Lasers ist kleiner als 2 kW. Das Strahlprodukt $\theta \cdot D$ der Laserstrahlung beträgt etwa $1,5 \cdot 10^{-4}$ rad·m und die Faser soll mit einem minimalen Biegeradius $R_{min}$ von 0,15 m biegbar sein. Mit diesen Zahlenwerten findet man für den Quotienten $(\theta \cdot D)/R_{min}$ einen Wert von $10^{-3}$, also weniger als $1,44 \cdot 10^{-3}$: Die Strahlung läßt sich also mit einer Faser übertragen, deren optisch wirksamen Zonen fast ausschließlich aus $SiO_2$, $F:SiO_2$ und $B_2O_3$ besteht und deren maximale Numerische Apertur $NA_{max}$ kleiner als etwa 0,30 ist (Anspruch 11).

Es wird eine Faser mit $NA_1 \approx 0,18$ verwendet, was noch etwas größer als die bevorzugte Untergrenze für $NA_1$ nach Anspruch 2 ist. Für den Durchmesser $D_1$ des Kerns wird ein Wert von $4,2 \cdot 10^{-4}$ m verwendet, was dem 0,51fachen von $(\theta \cdot D)/NA_1$ entspricht. Da starke Dotierungen vermieden werden sollen, wird für die maximale Numerische Apertur $NA_{max}$ nur ein Wert von 0,28 verwendet. $NA_2$ beträgt damit den Wert ≈ 0,21. Die mittlere Leistung dieses Lasers ist sehr hoch, deshalb sollen laterale Auskopplungen aus der strahlungsleitenden Zwischenschicht möglichst weitestgehend vermieden werden, weil das zu Zerstörungen der Faser führen könnte. Gemäß Anspruch 6 beträgt daher der Durchmesser $D_2$ der strahlungs-

leitenden Zwischenschicht $0,09 \cdot R_{min} \cdot NA_2^2 \approx 5,95 \cdot 10^{-4}$ m. Es wird eine Faser mit $D_2 \approx 6 \cdot 10^{-4}$ m verwendet. Für praktische Anwendungen der Faser ist dieser Faserdurchmesser gut brauchbar.

**Ansprüche**

1. Flexible optische Stufenindexfaser zur Übertragung von Strahlung mit hoher Leistung mit einem Kern und einem im wesentlichen konzentrisch zum Kern angeordneten Mantel aus wenigstens einer Schicht, bei der sich zwischen dem Kern und dem Mantel eine strahlungsleitende und zum Kern im wesentlichen konzentrische Zwischenschicht befindet und bei der die Brechzahlwerte für den Kern $n_1$, die strahlungsleitende Zwischenschicht $n_2$ und für die innerste Mantelschicht $n_3$ radial von innen nach außen abnehmen, d.h. $n_1$ ist größer als $n_2$ und $n_2$ ist größer als $n_3$, dadurch gekennzeichnet,

a) daß die durch $n_2$ und $n_1$ bestimmte Numerische Apertur $NA_1 = (n_1^2 - n_2^2)^{1/2}$ das 1,5- bis 2,9fache der dritten Wurzel von $(\theta \cdot D)/R_{min}$ beträgt, aber größer als 0,05 und kleiner als 0,28 ist, wobei $(\theta \cdot D)$ das als Strahlprodukt bekannte Produkt aus dem vollen Divergenzwinkel $\theta$ in rad mit dem Durchmesser D in m der in die Faser einzukoppelnden Strahlung ist, wobei diese Daten auf den Ausgang der Strahlungsquelle bezogen sind, und $R_{min}$ in m der durch die Anwendungen geforderte minimale Biegeradius der Faser ist,

b) der Durchmesser des Kerns $D_1$ in m das 0,45- bis 0,65fache des Quotienten $(\theta \cdot D)/NA_1$ beträgt,

c) die durch $n_3$ und $n_2$ bestimmte Numerische Apertur $NA_2 = (n_2^2 - n_3^2)^{1/2}$ den einfachen bis doppelten Wert von $NA_1$ beträgt

d) und daß der Außendurchmesser $D_2$ in m der strahlungsleitenden Zwischenschicht kleiner als $0,15 \cdot R_{min} \cdot NA_2^2$ ist.

2. Optische Faser nach Anspruch 1, dadurch gekennzeichnet, daß $NA_1$ größer ist als das 1,6fache und vorzugsweise größer ist als das 1,75fache der dritten Wurzel von $(\theta \cdot D)/R_{min}$.

3. Optische Faser nach wenigstens einem der Ansprüche 1 oder 2, dadurch gekennzeichnet, daß $NA_1$ kleiner ist als das 2,7fache und vorzugsweise kleiner ist als das 2,5fache der dritten Wurzel von $(\theta \cdot D)/R_{min}$.

4. Optische Faser nach wenigstens einem der Ansprüche 1 bis 3, dadurch gekennzeichnet, daß der Durchmesser $D_1$ in m das 0,45 bis 0,55fache von $(\theta \cdot D)/NA_1$ beträgt.

5. Optische Faser nach wenigstens einem der Ansprüche 1 bis 4, dadurch gekennzeichnet, daß der Durchmesser $D_1$ größer als $4 \cdot 10^{-5}$ m und kleiner als $10^{-3}$ m ist.

6. Optische Faser nach wenigstens einem der Ansprüche 1 bis 5, dadurch gekennzeichnet, daß der Außendurchmesser $D_2$ in m der strahlungsleitenden Zwischenschicht kleiner als $0,12 \cdot R_{min} \cdot NA_2^2$ und vorzugsweise kleiner als $0,09 \cdot R_{min} \cdot NA_2^2$ ist.

7. Optische Faser nach wenigstens einem der Ansprüche 1 bis 6, dadurch gekennzeichnet, daß die Dicke $(D_2 - D_1)/2$ der strahlungsleitenden Zwischenschicht der Faser größer als $25 \cdot 10^{-6}$ m und vorzugsweise größer als $5 \cdot 10^{-5}$ m ist.

8. Optische Faser nach wenigstens einem der Ansprüche 1 bis 7, dadurch gekennzeichnet, daß die Dicke der innersten Mantelschicht in m größer als $0,1 \cdot \lambda/NA_2$ und vorzugsweise größer als $0,2 \cdot \lambda/NA_2$ ist, wobei $\lambda$ in m die Wellenlänge der zu übertragenden Laserstrahlung und $NA_2$ die Numerische Apertur der strahlungsleitenden Zwischenschicht bezeichnet.

9. Optische Faser nach wenigstens einem der Ansprüche 1 bis 8 zur Übertragung von Strahlung im Wellenlängenbereich von $2,5 \cdot 10^{-7}$ m bis $2 \cdot 10^{-6}$ m, dadurch gekennzeichnet, daß der Kern, die strahlungsleitende Zwischenschicht und die innerste Mantelschicht im wesentlichen nur aus $SiO_2$ Fluor-dotiertem $SiO_2$ ($F:SiO_2$) oder aus mit $GeO_2$, $B_2O_3$, $P_2O_5$, $Al_2O_3$, $TiO_2$, $Ta_2O_5$ oder $ZrO_2$ dotiertem $SiO_2$ oder $F:SiO_2$ bestehen.

10. Optische Faser nach Anspruch 9, dadurch gekennzeichnet, daß der Kern, die strahlungsleitende Zwischenschicht und die innerste Mantelschicht im wesentlichen nur aus $SiO_2$, $F:SiO_2$ oder aus mit $B_2O_3$, $GeO_2$ oder $P_2O_5$ dotiertem $SiO_2$ oder $F:SiO_2$ bestehen und daß die Summe der Quadrate von den Numerischen Aperturen $NA_1$ und $NA_2$ kleiner als 0,16 ist bzw. daß $(NA_1^2 + NA_2^2)^{1/2}$ kleiner als 0,4 ist.

11. Optische Faser nach Anspruch 9, dadurch gekennzeichnet, daß der Kern, die strahlungsleitende Zwischenschicht und die innerste Mantelschicht im wesentlichen nur aus $SiO_2$ $F:SiO_2$ oder aus mit $B_2O_3$ oder $GeO_2$ dotiertem $SiO_2$ oder $F:SiO_2$ bestehen und daß $(NA_1^2 + NA_2^2)^{1/2}$ kleiner als 0,35 ist.

12. Optische Faser nach Anspruch 9, dadurch gekennzeichnet, daß der Kern, die strahlungsleitende Zwischenschicht und die innerste Mantelschicht im wesentlichen nur aus $SiO_2$, $F:SiO_2$ oder aus mit $B_2O_3$

dotiertem $SiO_2$ oder $F:SiO_2$ bestehen und daß $(NA_1^2 + NA_2^2)^{1/2}$ kleiner als 0,30 ist.

13. Optische Faser nach Anspruch 9,
dadurch gekennzeichnet,
daß der Kern, die strahlungsleitende Zwischenschicht und die innerste Mantelschicht im wesentlichen nur aus $SiO_2$ und $F:SiO_2$ bestehen und daß $(NA_1^2 + NA_2^2)^{1/2}$ kleiner als 0,24 ist.

14. Optische Faser nach wenigstens einem der Ansprüche 1 bis 8 zur Übertragung von Strahlung im Wellenlängenbereich von $2 \cdot 10^{-6}$ m bis $4 \cdot 10^{-6}$ m,
dadurch gekennzeichnet,
daß der Kern, die strahlungsleitende Zwischenschicht und die innerste Schicht des Mantels im wesentlichen nur aus $ZrF_4$, $HfF_4$, $LaF_3$, $AlF_3$, $GdF_3$, $BaF_2$, LiF, NaF und YF besteht, daß $NA_1$ größer als 0,07 und kleiner als 0,25 ist und daß $(NA_1^2 + NA_2^2)^{1/2}$ kleiner als 0,4 ist.

15. Optische Faser nach Anspruch 14,
dadurch gekennzeichnet,
daß $NA_1$ kleiner als 0,14 ist und daß $(NA_1^2 + NA_2^2)^{1/2}$ kleiner als 0,2 ist.

16. Optische Faser nach wenigstens einem der Ansprüche 1 bis 8 zur Übertragung von Strahlung im Wellenlängenbereich von $3 \cdot 10^{-6}$ m bis $1,1 \cdot 10^{-5}$ m,
dadurch gekennzeichnet,
daß der Kern, die strahlungsleitende Zwischenschicht und die innerste Mantelschicht im wesentlichen nur aus Chalkogenidgläsern bestehen, daß $NA_1$ größer als 0,09 und kleiner als 0,28 ist und daß $(NA_1^2 + NA_2^2)^{1/2}$ kleiner als 0,50 ist.

Abb. 1